# EUROPEAN PATENT APPLICATION

(11) **EP 3 363 623 A1**
(43) Date of publication of application: **22.08.2018**
(21) Application number: 17382077.0
(22) Date of filing: 16.02.2017
(51) Int. Cl.: B29C 70/38, B65H 57/16, B65H 57/24

(54) **COMB FOR FIBER LAYUP MACHINES**

(71) Applicant: Airbus Operations, S.L., 28906 Getafe Madrid (ES)
(72) Inventor: CERDEÑO CABELLO, Gabriel, 28906 Getafe (ES); DOMÍNGUEZ GARCÍA, Iván, 28906 Getafe (ES); TORRIJOS SÁNCHEZ MUÑOZ, Jorge, 28906 Getafe (ES); HERNÁNDEZ CAMPO, Juan, 28906 Getafe (ES)
(74) Representative: Elzaburu S.L.P.

(57) **Abstract**

Comb (1) for fiber layup machines comprising a row of teeth (4) separated by gaps on one of the edges of the comb (1), such that it comprises two parts:
- a guide part (2) comprising the row of teeth (4) separated by gaps, and
- a protection part (3) adjacent to the guide part (2),
both parts (2, 3) being joined by joining means.

## Description

### Field of the invention

This invention refers to a comb for fiber layup machines used in the manufacturing of composites.

### Background of the invention

Nowadays composites (also called composite materials) are very used in some industries (for example, in the aircraft industry). Composites consist of two elements: a matrix and a reinforcement.

One of the most used composites is CFRP (Carbon Fiber Reinforced Polymer). In CFRPs the reinforcement is the carbon fiber and the matrix is usually a polymer resin. The material properties depend on these two components.

During the manufacturing process of composites, the fibers are deposited on a layup surface. Fiber layup machines comprise combs for guiding the fiber material to the application point. In order to ensure adherence to the quality requirements for the composite material manufacturing, there are some tolerances which the machines must fulfil during the layup process. The comb is responsible to put the tows one near the other inside this tolerance (distance between tows, for example). The comb is in the final application point, so the final quality depends of the status of the comb 100%.

The combs currently used are usually manufactured in several parts (for instance, in at least seven different parts), the material used is based on plastic and the fixation mode is with small screws. These combs have a lifetime not longer than one part and their quality indicator is very low.

Accordingly, there is a need to provide a comb for fiber layup machines which avoids the mentioned drawbacks.

### Summary of the invention

The object of the present invention is to provide a comb for layup machines with an improved maintainability.

The invention provides a comb for fiber layup machines comprising a row of teeth separated by gaps on one of the edges of the comb, such that it comprises two parts:
- a guide part comprising the row of teeth separated by gaps, and
- a protection part adjacent to the guide part,
both parts being joined by joining means.

This configuration of the comb for fiber layup machines of the invention has the following advantages:
- Cost: less combs are needed per year and the parts are cheaper.
- Time: the quick change allows to win some minutes per change and to avoid adjustments after the change.
- Quality: it has the highest quality indicator, considerably reducing the reworks.

The configuration of the comb for fiber layup machines of the invention allows preventive maintenance to be applied, and spare parts can be used to replace worn parts.

Other characteristics and advantages of the present invention will be clear from the following detailed description of several embodiments illustrative of its object in relation to the attached figures.

### Brief description of drawings

Figure 1 shows an exploded view of the comb for fiber layup machines of the invention.
Figure 2 shows a perspective view of the comb for fiber layup machines of the invention with side fixation parts.
Figures 3A and 3B show the fixation of the comb for fiber layup machines of the invention.

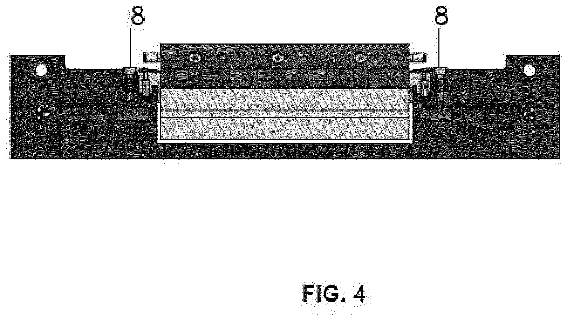

Figure 4 shows a cross-section of the comb for fiber layup machines of the invention fixed in its position.

### Detailed description of the invention

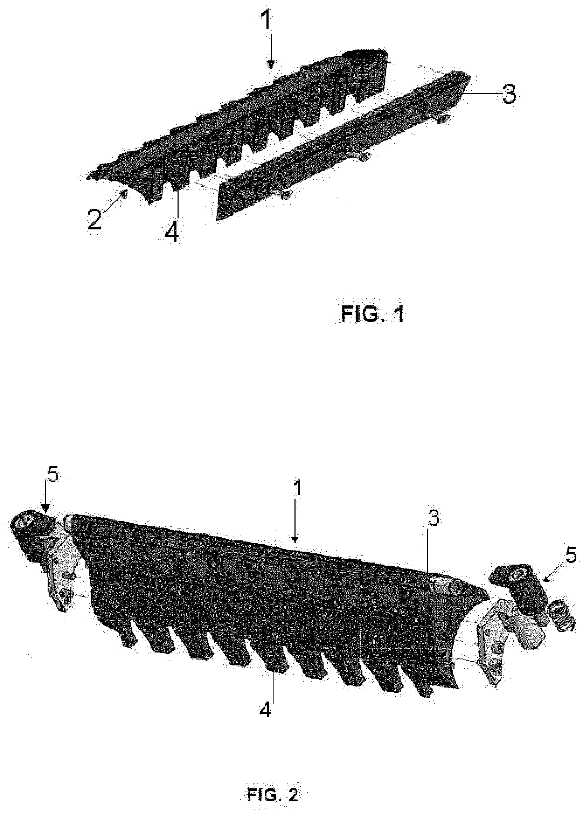

Figure 1 shows an exploded view of the comb 1 for fiber layup machines of the invention, in which it can be seen that the comb comprises two parts: a guide part 2 comprising a row of teeth 4 separated by gaps, and a protection part 3, adjacent to the guide part, the protection part 3 also having a guide function. Both parts 2, 3 are joined by joining means, which can be releasable.

The guide part 2 (or main part) of the comb 1 is used to guide the carbon fiber material to the application point and the protection part 3 is used to protect the comb 1. This configuration allows an easy cleaning without the risks of affecting the positioning of the material after cleaning.

Figure 2 shows a perspective view of the comb 1 for fiber layup machines of the invention, in which the guide part 2 and the protection part 3 have been joined together. Any kind of conventional joining means (such as screws) can be used.

In figure 2 it can also be seen that the comb 1 can comprise side fixation parts 5, which allow a quick change of the comb 1 and to place it in the machine easily without the need of special tools.

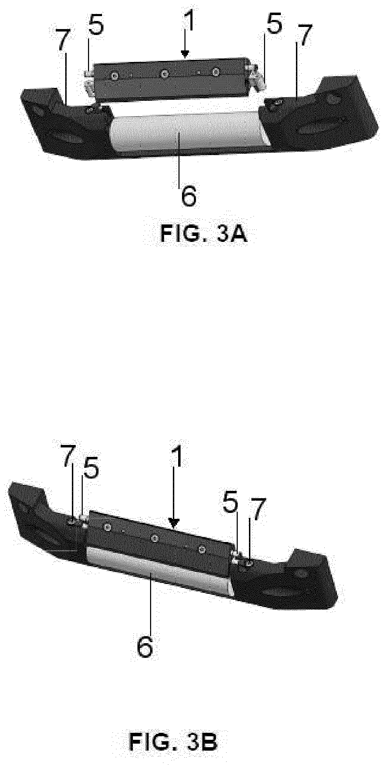

Figures 3A and 3B show the fixation of the comb 1 in the fiber layup machine. The fixation parts 5 are inserted in the machine, which contains corresponding rotating parts 6 with a protrusion 7. With 1/4 of key turn the protrusion 7 of the rotating part 6 can cover the fixation parts 5 of the comb 1 and the comb 1 is secured in its position (figure 3B). The comb 1 can be released by additionally turning the rotating part 6 (figure 3A).

A screw part 8 in the fixation part will be used as adjustment. This adjustment will be unique for each comb 1, and should be the same after the normal process (along the time).

The comb 1 is preferably made of metallic material, and the guide part 2 and the protection part 3 have a superficial coating of Nituff material. This superficial treatment allows the enlargement of the life of the comb 1.

The comb 1 for fiber layup machines of the invention can be used in several sizes (8, 16, 24, 32 tows).

Although the present invention has been fully described in connection with preferred embodiments, it is evident that modifications may be introduced within the scope thereof, not considering this as limited by these embodiments, but by the contents of the following claims.

## Claims

1. Comb (1) for fiber layup machines comprising a row of teeth (4) separated by gaps on one of the edges of the comb, **characterized in that** it comprises two parts:
- a guide part (2) comprising the row of teeth (4) separated by gaps, and
- a protection part (3) adjacent to the guide part (2),
both parts (2, 3) being joined by joining means.

2. Comb (1) for fiber layup machines according to claim 1, wherein the joining means are releasable joining means.

3. Comb (1) for fiber layup machines according to any of the previous claims, additionally comprising side fixation parts (5).

4. Comb (1) for fiber layup machines according to claim 3, wherein each of the side fixation parts (5) comprises a screw part.

5. Comb (1) for fiber layup machines according to any of the previous claims, wherein the parts of the comb (1) are made of metallic material.

6. Comb (1) for fiber layup machines according to any of the previous claims, wherein the guide part (2) and the protection part (4) have a superficial coating of Nituff material.
